**Europäisches Patentamt**

**European Patent Office**

**Office européen des brevets**

(19)

(11) Veröffentlichungsnummer: **0 099 510**
**B1**

(12) # EUROPÄISCHE PATENTSCHRIFT

(45) Veröffentlichungstag der Patentschrift:
**18.03.87**

(21) Anmeldenummer: **83106583.4**

(22) Anmeldetag: **06.07.83**

(51) Int. Cl.⁴: **A 21 C 5/02,** A 21 C 9/08,
A 21 B 7/00

(54) **Vorrichtung zur Herstellung und Verarbeitung von Gebäckteigformlingen und Verfahren zur Steuerung solcher Vorrichtung.**

(30) Priorität: **17.07.82 DE 3226795**

(43) Veröffentlichungstag der Anmeldung:
**01.02.84 Patentblatt 84/5**

(45) Bekanntmachung des Hinweises auf die Patenterteilung:
**18.03.87 Patentblatt 87/12**

(84) Benannte Vertragsstaaten:
**AT BE CH FR GB IT LI LU NL SE**

(56) Entgegenhaltungen:
**EP-A-0 093 785
BE-A-498 301
DE-A-3 151 017
FR-A-1 297 553
US-A-2 585 379
US-A-3 068 354**

(73) Patentinhaber: **Antpöhler, Heinz-Josef, Lippstädter Strasse 68, D-4795 Delbrück (DE)**

(72) Erfinder: **Antpöhler, Heinz-Josef, Lippstädter Strasse 68, D-4795 Delbrück (DE)**

(74) Vertreter: **Hanewinkel, Lorenz, Dipl.-Phys., Patentanwalt Ferrariweg 17a, D-4790 Paderborn (DE)**

## Beschreibung

Die Erfindung betrifft eine Vorrichtung zur Herstellung und vereinzelten Ablage von Gebäckteigformlingen auf ein vorzugsweise schrittweise antreibbares Förderband oder Backblech.

Es ist aus DE-A 1-31 51 017 eine Vorrichtung bekannt, die Formlinge aus Gebäckteig durch Formen von Teigsträngen und anschließendes Schneiden in Scheiben herstellt und dieses auf ein Backblech oder Förderband ablegt.

Diese Vorrichtung eignet sich nicht für Teige mit ganzen Früchten, Nüssen, Mandeln usw. und mit einem hohen Anteil an klebenden Bestandteilen, z. B. Honig und Fett, da die Früchte beim Formen der Stränge und beim Schneiden von Teigsträngen zerstört werden. Außerdem eignet sich die Vorrichtung nicht zum Verarbeiten von klebenden Teigen, da die Scheiben beim Schneiden teils am Messer und teils an der Teigstange hängen bleiben und nicht ordnungsgemäß vereinzelt auf das Backblech abgelegt werden können. Es ist deshalb bis heute üblich, Formlinge aus solchen Teigen, z. B. für Florentinergebäck, von Hand herzustellen.

Es ist Aufgabe der Erfindung, eine Vorrichtung zu offenbaren, die die Herstellung von Formlingen aus Teigen mit ganzen Früchten, Nüssen, Mandeln usw. und/oder hohem Anteil an klebenden Bestandteilen, z. B. Honig und Fett, ermöglicht und die genannten Nachteile nicht besitzt.

Die Lösung der Aufgabe ist dadurch gegeben, daß die Vorrichtung aus einem Trog für Gebäckteig mit einem Boden besteht und mindestens einen Aufnehmer enthält mit einem einseitig offenen, vorzugsweise zylindrischen Formraum, der durch eine Formwand gebildet wird und mit einem Rand abschließt und in den vorzugsweise axial eine Bohrung eintritt, und mit einem ersten und zweiten Antrieb, durch den der Formraum so positioniert werden kann, daß der Rand in einer ersten Stellung den Boden berührt und daß er sich in einer zweiten Stellung über dem Förderband bzw. dem Backblech befindet, und mit einem dritten Antrieb, der den Aufnehmer in der ersten Stellung axial zu dem Formraum relativ zum Boden verdrehen kann, und mit einem Auswerfer, der in der Bohrung verschieblich ist und mit einem vierten Antrieb mit einer Stirnseite zu der Formwand wahlweise bündig oder in den Formraum eintretend eingestellt werden kann, und/oder mit einer steuerbaren Zuführung von Druckluft durch die Bohrung.

In Verbindung mit der Lösung des wesentlichen Problems der maschinellen Herstellung von Gebäck aus den genannten Teigen, nämlich der Herstellung der Formlinge, ist es eine vorteilhafte Weiterentwicklung, diese Vorrichtung in eine vollautomatische Produktionsanlage zu integrieren. Hierzu sind weitere vorteilhafte Ausgestaltungen der Backbleche der Förderanlage, der Gebäckstückentnahmevorrichtung und der gesamten Steuerung der Anlage in einem Ausführungsbeispiel angegeben und in den Ansprüchen genannt.

Eine Ausgestaltung der Erfindung ist anhand der Figuren 1 bis 6 dargestellt.

Fig. 1 zeigt einen Aufriß teilweise geschnitten der Vorrichtung zur Herstellung der Formlinge;

Fig. 2 zeigt einen Horizontalschnitt II der Vorrichtung nach Fig. 1;

Fig. 3 zeigt den Aufnehmer für den Formling, senkrecht geschnitten;

Fig. 4 wie Fig. 3 in Arbeitsstellung "Ausstoßen";

Fig. 4a zeigt den Abstreifer in Aufsicht zu Fig. 3 und senkrecht geschnitten mit Backblech zu Fig. 4;

Fig. 5 zeigt einen Abnehmer im Schnitt;

Fig. 5a zeigt ein Detail vom Backblech in Aufsicht

Fig. 5b zeigt einen Abnehmer im Schnitt und

Fig. 6 zeigt eine Produktionsanlage von Florentinergebäck mit Steuerung.

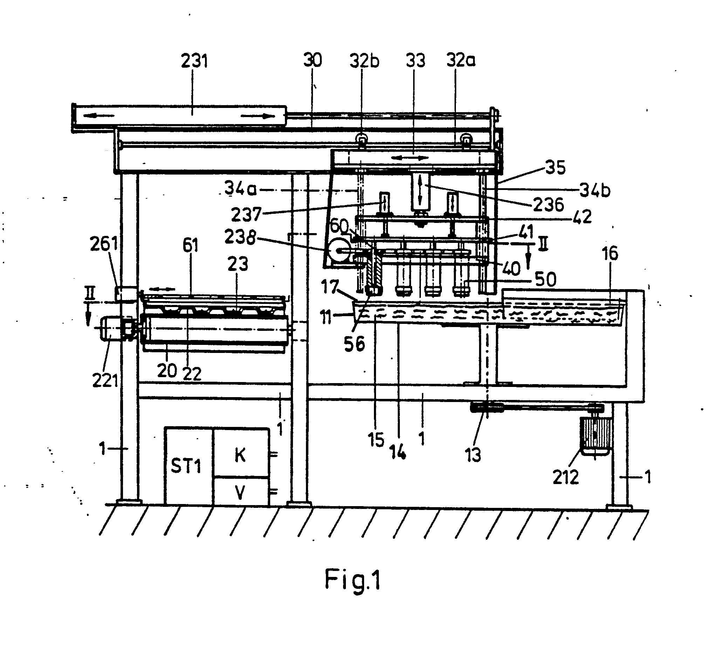

In Fig. 1 ist die Vorrichtung in Seitenansicht dargestellt, wobei das Förderband 20 für die Backbleche 22, der Trog 11 für den Teig 15 und der Schutz 35 gegen unbeabsichtigten Zugriff zu bewegten Teilen geschnitten ist. Die gesamte Vorrichtung ist in einem Gestell 1 aus Stahlträgern gelagert. Der Teig 15 befindet sich in einem runden Trog 11, der um seine Achse 13 mit Antrieb 212 gedreht werden kann.

In den Trog 11 ragt in einer Höhe, die dem Zwei- bis Dreifachen der Tiefe des Formraumes 56 entspricht, radial ein elastischer, z.B. rechenartiger, Verteiler 16, der beim Drehen des Troges den Teig gleichmäßig auf etwa gleicher Höhe verteilt und die durch Teigentnahme entstehenden Löcher einebnet.

In den Trog 11 senkt sich von oben ein Satz Aufnehmer 50 und entnimmt den Teig. Die Aufnehmer 50 sind in einer Lagerplatte 40 angeordnet, die auf den Führungsstangen 34a, b vertikal verschieblich ist und durch Antriebszylinder 236 bewegt wird, dessen Hub etwas größer als die Tiefe des Troges 11 ist. Diese gesamte Anordnung ist an einem Quertransport 30 aufgehängt, der aus einem Wagen 33 mit Rollen 32b besteht der auf Schienen 32a horizontal verschieblich gelagert ist und durch Antriebszylinder 231 zwischen der Lage über dem Trog und einer Lage über dem Förderband 20, das die Backbleche 22 transportiert, bewegt wird.

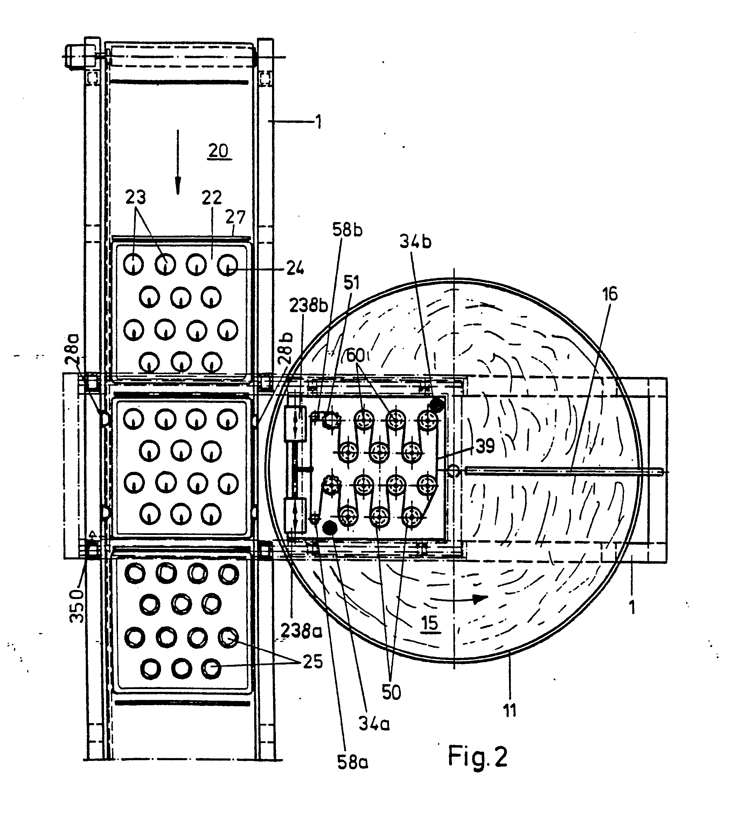

In Fig. 2 ist die Vorrichtung im Schnitt dargestellt, aus dem man ersieht, wie insgesamt 14 Aufnehmer 50 auf Lücke in 4 Reihen zueinander angeordnet sind. An ihren oberen Enden besitzen die Aufnehmer 50 einen Zahnkranz 51, über die durchgehend eine Antriebskette 39 läuft, die außerdem über Umlenkräder 58a, b geführt ist und von den Antriebszylindern 238a, b hin und her bewegt wird, daß die Aufnehmer 50 sich um ihre Achse jeweils um 360° vor- bzw. zurückdrehen.

Die Antriebszylinder 238a, b sind auf die Lagerplatte 40 montiert. Außerdem sind mit der Lagerplatte 40 über Antriebsträger 42 Antriebszylinder 237, dessen Hub etwas größer als die Tiefe des Formraumes 56 ist, verbunden, die einen parallel geführten Auswerferträger 41 vertikal bewegen. An diesem sind 14 Auswerfer 60 vorzugsweise mit ca. 1 mm Durchmesser nach unten jeweils in eine zentrale Bohrung 52 der Aufnehmer 50 hineinreichend befestigt.

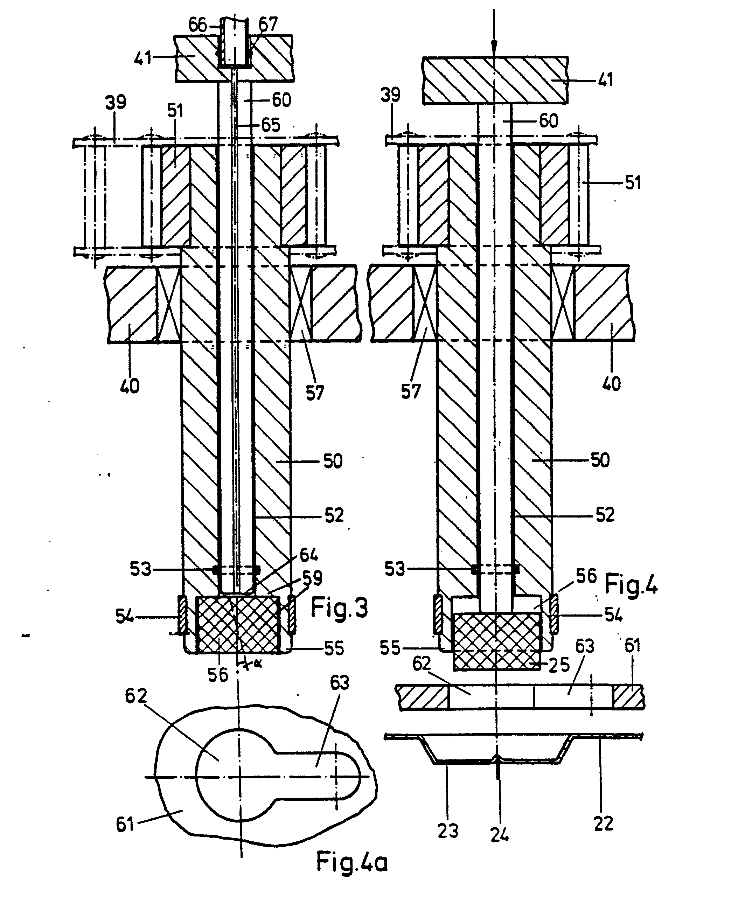

Fig. 3 zeigt die Einzelheiten des Aufnehmers 50 und des Auswerfers 60 im Schnitt. Der Aufnehmer 50 ist ein zylindrischer Kunststoffkörper, von ca. 30 mm Durchmesser, der oberhalb der Mitte in einem Lager 57 drehbar in der Lagerplatte 40 gehalten ist. Oberhalb der Lagerplatte 40 ist der Zahnkranz 51 für den Kettenantrieb 39. Axial in den Aufnehmer 50 verläuft eine ca. 10 mm starke Bohrung 52 in der mit einem Dichtring 53 der Auswerfer 60, der ebenfalls aus Kunststoff besteht, geführt ist.

Am unteren Ende besitzt der Aufnehmer 50 einen zylindrischen durch die Formwand 59 gebildeten Formraum 56 von 24 mm Durchmesser und 15 mm Tiefe. Wegen der hohen Belastung bei der Teigaufnahme ist der Aufnehmer 50 außen um die Kunststoffwand des Formraumes 56 mit einem Ring 54 aus Messing oder Edelstahl ermiert. Die Formwand ist an dem Rand 55 abgerundet. In einer bevorzugten Ausführungsform ist der Formraum 56 leicht exzentrisch oder wie in Fig. 4 gezeigt um einen kleinen Winkel α gegen die Lagerachse des Aufnehmers 50 geneigt gebohrt, wodurch eine geringere Haftung des Teiges an der Formwand 59 in Verbindung mit der Drehbewegung erreicht wird.

In Fig. 3 ist der Auswerfer 60 in seiner oberen Lage relativ zum Aufnehmer 50 dargestellt. Seine Stirnfläche 64 schließt den Formraum in seiner oberen Stellung nach oben bündig ab.

In Fig. 4 ist der Auswerfer 60 in einem Zwischenstadium der Auswerfbewegung gezeigt, und der teilweise ausgeschobene Formling ist zu erkennen. Am Ende der Auswerferbewegung steht die Stirnfläche 64 etwas über den Rand 55 hinaus. Dabei befindet sich der Wagen 33 in der Position über dem Backblech 22, und die Ränder 55 der Auswerfer dicht oberhalb eines Abstreifers 61 aus Kunststoff, der unter jedem Aufnehmer 50 eine Bohrung 52 (Fig. 4a) besitzt, die im Durchmesser etwas größer als der Formling ist. Seitlich an die Bohrungen 62 schließt sich jeweils ein Schlitz 63 an, der etwas breiter als der Durchmesser des Auswerfers 60 ist.

Unter dem Abstreifer 61 befindet sich des Backblech 22, das in der gleichen Anordnung, in der die Aufnehmer 50 zueinander stehen, Vertiefungen 23 besitzt, die beim Auswerfen unter die Aufnehmer positioniert werden (Fig. 4a). Der Abstreifer 61 besitzt einen Antriebszylinder 261, der ihn in Richtung des Verlaufes der Schlitze 63 seitlich bewegt und den Formling von dem Auswerfer 60 abstreift.

Nach erfolgtem Abwerfen der Formlinge 25 auf das Backblech 22 für das Führungen 28a, 28b in dem Gestell 1 angeordnet sind, wird dieses durch Mitnehmer 27 des Förderbandes 20 mit dem Antrieb 221 weitertransportiert und ein neues Backblech in die Auswerferposition gebracht.

Sämtliche pneumatischen Antriebe sind, soweit erforderlich, über steuerbare Ventile mit einem Kompressor K oder einer Vakuumanlage V verbunden. Die Steuerung der Antriebe bzw. Ventile erfolgt über eine Steueranlage ST1. Die Bewegungen der Antriebe sind in bekannter Weise jeweils durch Anschläge und Positionsmelder begrenzt oder vorgegeben. Der gesamte Arbeitsablauf der verschiedenen Funktionen ist in einer Schrittfolge gesteuert.

Das besondere Problem bei der Herstellung der Formlinge besteht in der Aufnahme einer definierten Teigmenge ohne daß einzelne Früchte zerstört werden und ohne daß der Teig aus dem Formraum 56 herausfällt oder in diesem beim Auswerfen ganz oder teilweise hängen bleibt. Der Teig 15 wird deshalb im Trog 11 auf etwa der doppelten Höhe gehalten verglichen zur Tiefe des Formraumes. Die Temperatur des Teiges wird auf ca.60° C eingestellt, um die optimal formbare Konsistenz auszunutzen.

Die Aufnehmer 50 werden durch den Antrieb 236 sechte bis auf den Boden 14 des Troges 11 abgesenkt und anschließend minimal wieder angehoben. Dann werden sie durch den Antrieb 238 um 360° um ihre Achsen gedreht. Durch die Drehbewegung schiebt sich der überflüssige Teig an die Seite; die Abrundung des Randes 55 verhindert dabei ein Zerdrücken der Früchte. Um die zähe Verbindung, die durch den Honig- und Zuckeranteil des Formlings zwischen der Teigmasse und dem Trogboden 14 besteht, endgültig zu trennen, wird außerdem in der unteren Stellung der Aufnehmer 50 während deren Drehung der Trog 11 um einige Zentimeter weitergedreht und so die Verbindung abgeschert. Anschließend werden die Aufnehmer 50 nach oben bewegt und dann mit dem Quertransport 30 zum Auswerfen seitlich positioniert.

Beim Auswerfen durch das Absenken der Auswerfer 60 erfolgt die Rückdrehung der Aufnehmer 50 durch den Antrieb 238 und daran anschließend die Bewegung des Abstreifers 61 wie beschrieben.

Zur Unterstützung des Auswerfvorganges ist in einer vorteilhaften Ausgestaltung der Auswerfer 60 mit einer Bohrung 65 axial versehen, die über eine Dichtung 67 mit einem Rohr 66 eines Druckluftverteilers verbunden ist und über ein steuerbares Ventil während des Auswerfvorganges mit Druckluft beaufschlagt wird.

Sämtliche Teile, die mit dem Teig zur Bildung des Formlings in Berührung kommen, sind aus Polytetraflouräthylen oder einem ähnlichen geeigneten Kunststoff hergestellt, der eine geringe Oberflächenhaftung besitzt. Ebenso ist dès Backblech 22 mit einer die Haftung vermindernden Beschichtung versehen.

Die Vorrichtung kann für kleinere oder größere Leistungen oder andere Formlinggrößen durch entsprechende Abwandlung verändert werden, und lineare Transporte können durch rotierende und umgekehrt ersetzt werden, oder es können die Relativbewegungen vom Trog zum Aufnehmer, vom Aufnehmer zum Förderband, vom Aufnehmer zum Abstreifer, vom Aufnehmer zu Trogboden usw. durch Bewegung des jeweils anderen Teiles als des angegebenen erzeugt werden, ohne daß die wesentliche Grundidee verlassen wird. So kann die Addition der rotierenden Bewegung des Aufnehmers 50 zur Bewegung des Troges 11 bzw. Trogbodens 14 auch durch eine exzentrische Rotation des Aufnehmers 50 ersetzt werden, oder der Quertransport 30 kann eine Teilbewegung ausführen.

Statt auf einzelne Backbleche können die Formlinge auch auf ein kontinuierlich laufendes Band oder in eine Verpackung abgeworfen und damit z.B. in eine Tiefkühlanlage zur Zwischenlagerung oder einen Ofen gefördert werden.

Bei einer Zusammensetzung des Teiges mit einem geringeren Anteil an klebrigen Zutaten ist es auch möglich, die Vorrichtung dadurch zu vereinfachen, daß Vakuum und Druckluft beim Aufnehmen bsw. Auswerfen statt durch den Auswerfer 60 direkt durch eine etwa einen Millimeter starke Bohrung 65 in den Formraum 56 geführt wird. Der Auswerfer 60 und dessen Antrieb 237 entfallen dadurch. In dieser Ausführung ist eine Verteileranordnung an die Bohrungen 65 angeschlossen, die die Druckluft bzw. das Vakuum gesteuert über Ventile zuführt.

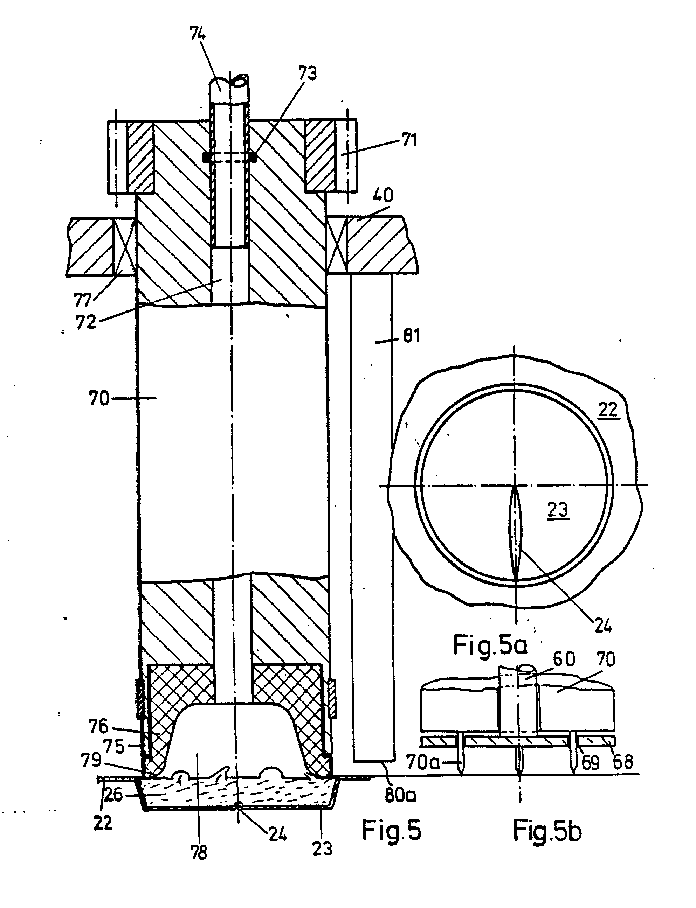

Die in Fig. 4a dargestellte Form der Vertiefungen 23 in den Backblechen 22, deren Volumen etwa der Größe des Formlings und deren Tiefe etwa der halben Höhe des Formlings entspricht, eignen sich besonders zur Verarbeitung von Florentiner-Teig, da durch das Zerschmelzen der Zucker- und Fettanteile die Früchte erhaben als wesentliches Strukturelement des Backwerks beim Backen hervortreten. Die Seitenwand der Vertiefung 23 ist um ca. 45° kegelförmig zur Erleichterung des Entformungsvorganges abgeschrägt. Zusätzlich ist zum gleichen Zweck radial eine 1 bis 2 Millimeter hohe Erhöhung 24 in der Vertiefung 23 angebracht. Da sich unter dem Gebäckstück 26 ein klebriger Ölfilm ausbildet, ist ein Entformen nur möglich, wenn seitlich Luft unter das Gebäckstück treten kann, was durch die Erhöhung 24 (Fig. 4a, 5a) in Verbindung mit einem drehenden oder exzentrischen Kraftangriff auf das Gebäckstück bewirkt wird. Es ist auf diese Weise möglich, die Gebäckstücke maschinell von dem Backblech 22 abzunehmen.

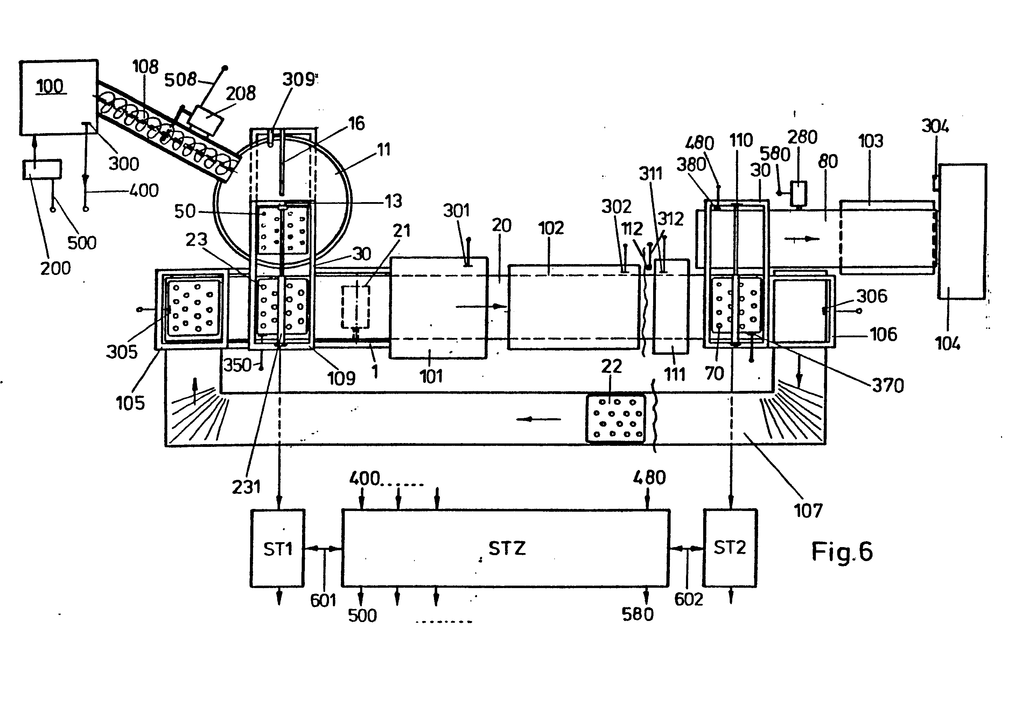

In Fig. 5 ist das wesentliche Element, der Abnehmer 70 einer geeigneten Vorrichtung dargestellt. Diese Vorrichtung 110 (Fig. 6) entspricht in vorteilhafter Weise weitgehend der in Fig. 6 gezeigten Aufnehmervorrichtung 109;

lediglich deren Trog 11 ist durch ein weiteres Förderband 80 ersetzt und der Auswerfer 60 ist entfallen. In gleicher Anordnung sind statt der Aufnehmer 50 die Abnehmer 70 in der Lagerplatte 40 mit Lagern 77 eingesetzt. Der Kettenantrieb 39 ist um den Zahnkranz 71 geführt, der den Abnehmer 70 in Drehbewegung versetzt, wenn das Gebäckstück gelockert werden soll.

Durch Rohr 74 wird über einen Verteiler Vakuum in die axiale Bohrung 72 des Abnehmers 70 geführt, womit das Gebäckstück angesaugt und während des Quertransportes von Transportband 20 zu Transportband 80 gehalten wird. Die Kraftübertragung der Drehbewegung des Abnehmers auf das Gebäckstück und die Abdichtung des Vakuums zu ihm erfolgt durch einen Dichtungseinsatz 76 aus Schaumstoff in einer Ausnehmung an der Stirnseite des Abnehmers 70, dessen Dichtlippen 79 mehrere Millimeter stark sind und seitlich über den Rand 75 der Ausnehmung hinausragen. Der Durchmesser des Dichtungseinsatzes 76 entspricht etwa der Größe des Gebäckstückes. Der Schaumstoff ist einerseits abriebfest, damit das Gebäck nicht verunreinigt wird und andererseits so elastisch, daß die Früchte nicht zerstört, aber so weit umschlossen werden, daß eine ausreichende Abdichtung des Vakuums gegeben ist.

Um den Vorgang des Ablösens vom Backblech vorteilhaft zu unterstützen und ein Zerbrechen des Gebäckes zu vermeiden, ist zwischen dem Ofen 101 und der Abnehmervorrichtung 110 (Fig. 6) ein Kühler 102 und ein Nachheizer 111 geschaltet. Durch den Kühler 102 wird das Gebäck gefestigt; die Kühlung erfolgt deshalb zweckmäßig von oben. In der Nachheizung 111 wird das Backblech 22 kurzzeitig erhitzt, damit der Ölfilm zwischen dem Backblech 22 und dem Gebäck verflüssigt wird, das Gebäckstück aber noch nicht aufweicht.

Fig. 6 zeigt eine vollautomatisch steuerbare Fertigungsanlage für Florentinergebäck in der die Aufnehmervorrichtung 109 und die Abnehmervorrichtung 110 in Verbindung mit den Förderern 20, 107 der Backbleche 22 durch den Ofen 101, den Kühler 102 und den Nachheizer 111 die wesentlichen Baugruppen darstellen.

Der Aufnehmervorrichtung 109 wird von einem Teigmischer 100 über einen Teigtransport 108 bekannter Bauweise so beschickt, daß ein ausreichender Teigvorrat von geeigneter Temperatur im Trog 11 jeweils vorhanden ist.

Der Quertransport 30 des Abnehmers 110 setzt das Gebäck auf ein Förderband 80 einer Gießanlage 103 für Schokoladenguß bekannter Bauweise, an die sich eine Verpackungsanlage 104 anschließt.

Sämtliche Baugruppen der Anlage werden in ihrer Arbeitsweise koordiniert durch eine Steuerzentrale STZ betrieben, mit der entweder die Antriebe und Funktionsmelder direkt oder die Steueranlagen ST1, ST2 der Aufnehmervorrichtung bzw. Abnehmervorrichtung durch Signal- und Steuerleitungen 601, 602 verbunden sind. Der Übersichtlichkeit halber sind die Bezugszeichen mit jeweils gleichen Anfangsziffern gewählt worden und die Baugruppen mit 1 x y die zugehörigen Antriebe oder Temperiergeräte mit 2 x y die Betriebsmelder mit 3 x y, die Signalleitungen der Betriebsmelder mit 4 x y und die Steuerleitungen der Antriebe und Temperiergeräte mit 5 x y bezeichnet worden. Die einzelnen Antriebe der Baugruppen arbeiten dann, wenn die Betriebsmelder der nachgeschalteten Baugruppen die Funktionsbereitschaft signalisieren und die Baugruppe selbst mit Material beschickt ist und ggf. den vorgeschriebenen Betriebszustand, z.B. eine vorgeschriebene Temperatur, erreicht hat.

Beispielsweise arbeitet der Antrieb 280 und die Gießanlage 103 wenn der Beschickungsmelder 380 das erfolgte Absetzen des Gebäckes von den Abnehmern auf das Förderband 80 meldet und die Verpackungsanlage 304 betriebsbereit ist.

Entsprechend arbeitet die Abnehmervorrichtung 110, wenn einerseits die Verpackungs- und Gießanlage funktionsbereit ist, der Rücktransport 106, 107 am Melder 306 freie Kapazität meldet und der Melder 370 das Vorhandensein eines aufgeheizten Backbleches in richtiger Position zum Abnehmer 70 signalisiert.

Die einzelnen Bewegungsabläufe und die Vakuumzuführung werden durch die Steueranlage ST 2 gesteuert, die, entsprechend vereinfacht, wie die Steueranlage ST 1 ausgeführt ist.

Der Ofen 101, der Kühler 102 und der Nachheizer 111 sind jeweils mit Temperatursensoren 301, 302, 311 ausgerüstet, die die Zonentemperatur und vorzugsweise auch die Backblechtemperatur ermitteln. Da die Verweilzeit im Ofen 101 zeitlich vorgegeben ist, ist es erforderlich, daß auch bei Störungen am Abnehmer 110, 111 der Gieß- oder Verpackungsanlage immer ausreichend freier Stauraum 112 vor diesem vorhanden ist und dies vom Melder 312 angegeben wird, bevor der Antrieb 21 ein weiteres Backblech mit Formlingen in den Ofen 101 transportiert und der Aufnehmer 109 wieder in Tätigkeit gesetzt wird.

Die einzelnen Steuervorgänge des Teigaufnehmens und des Absetzens der Formlinge auf die Backbleche erfolgt in schon beschriebener Weise unter Kontrolle durch die Steueranlage ST 1. Ein Arbeitsvorgang wird jeweils ausgelöst, wenn der Ofen 101 entsprechend dem eben Gesagten aufnahmebereit ist, ein Backblech in richtiger Position durch Melder 350 angegeben wird und der Teigniveaumelder 309 signalisiert, daß ausreichend Teig vorhanden ist.

Durch den Teigniveaumelder 309 gesteuert, arbeitet der Antrieb 208 des Teigförderers 108, sofern das Vorhandensein von Teig der vorgeschriebenen Temperatur durch den Melder 300 signalisiert wird.

Fehlt Teig entsprechend einer vorliegenden Anforderung an dem Teigförderer 108, so wird der Teigmischer 100 über Steuerleitung 500 aktiviert.

Entsprechend dem Stauraum 112 ist auch in der Rückführung 107 der Backbleche eine Stapelvorrichtung 105 mit einem Melder 305 für den Belegungszustand angeordnet. Der Stauraum 112 enthält zweckmäßig eine Stapelvorrichtung.

Die dargestellten Förderanlagen 20, 107, 80, 108 können selbstverständlich auch durch andere bekannte Anordnungen ersetzt werden, z.B. wird zweckmäßig das Förderband entsprechend den räumlichen Gegebenheiten durch mehrere Teilförderer ersetzt.

In dem Ofen 101, dem Kühler 102 werden zweckmäßig bei begrenzter Baulänge der Anlage jeweils Paternostertransporte für die Backbleche angeordnet, deren Kapazität der relativen Verweilzeit des Backgutes in den jeweiligen Baugruppen entspricht. Zwischen den Baugruppen sind dabei zweckmäßig Rutschen für die Beckbleche vorgesehen; ein separater Antrieb hierfür entfällt dann.

Anstelle des Förderbandes 20 in Verbindung mit einzelnen Backblechen 22 wird in einer anderen Ausführung ein endloses Band mit entsprechenden Vertiefungen in geeigneter Weise durch die Baugruppen geführt.

Der Rücklauf des Bandes oder die Rückführung 107 der Bleche ist in Fig. 6 nur schmatisch dargestellt. Er ist zweckmäßig ober- oder unterhalb der Anlage angeordnet, um eine gute Zugänglichkeit aller Baugruppen zu ermöglichen und die Stellfläche möglichst gering zu halten. Selbstverständlich lassen sich auch die Querförderer 30 der Auf- und Abnehmervorrichtung statt seitlich, stirnseitig zum Förderband 20 orientiert aufstellen. Das Förderband 20 mit seinem Antrieb kann senkrecht zum Förderband 80 orientiert werden.

Selbstverständlich ist die Zwischenschaltung weiterer Puffer- und Transportvorrichtungen bei Änderung des Fertigungsablaufes und anderen räumlichen Gegebenheiten möglich. Auch können Teile der Anlage mit bekannten Vorrichtungen zur Herstellung anderer Gebäckarten bei entsprechender Umschaltung der Förderwege über Weichen verkoppelt werden.

Eine zweckmäßige Verknüpfung einer bekannten Vorrichtung zur Herstellung und Vereinzelung von Teigformlingen, die nach dem Strangverfahren arbeitet, erfolgt vor dem Ofen 101. Die Abnehmervorrichtung 110 kann dann ebenfalls eingesetzt werden.

Insbesondere die Vorrichtung 109 zur Herstellung der Formlinge, aber auch die Abnehmervorrichtung 110 und die Gesamtanlage Fig. 6 stellen für sich eigenständige Erfindungsgegenstände dar, die in der dargestellten Anlage besonders vorteilhaft zusammenwirken. Für die Herstellung der Vorrichtungen 109 und 110 ist es zusätzlich vorteilhaft, daß sie in den meisten Teilen gleich ist und auch weitgehend in der Steuerung gleichartig sind.

Das neuartige Backblech ist für sich genommen erfinderisch ausgestaltet, und es wird vorteilhaft in der Abnehmervorrichtung 110 und in Verbindung mit dem Nachheizer 111 genutzt.

Die exakte Positionshaltung der Formlinge bzw. Gebäckstücke während der Verarbeitung durch die Lagefixierung in den Vertiefungen der Backbleche vereinfacht die Abnahmevorrichtung und ermöglicht auch eine exakte Positionierung für die nachgeschalteten Bearbeitungsschritte, wodurch sich auch dort entsprechende Vereinfachungen ergeben.

In Fig. 5b ist eine alternative Ausgestaltung des Abnehmers 70 dargestellt. Hierbei sind an der unteren Stirnfläche 4 Nadeln 70a aus Stahl angeordnet, die beim Absenken des Abnehmers um einige Millimeter in das Gebäck eingedrückt werden und mit einer anschließenden Drehung von ca. 20° um die Achse des Abnehmers das Gebäckstück vom Backblech lösen. An den Nadeln 70a bleibt das Gebäckstück beim Transport in die Position über dem Förderband 80 hängen. Dort wird es mit dem Auswerfer 60, an dessen unterem Ende eine Abstreiferscheibe 68 von gleichem Durchmesser wie das Gebäckstück angebracht ist und durch die die Nadeln 70a in Bohrungen 69 hindurchgeführt sind, von den Nadeln abgestreift.

Um das exakte Maß des Eindringens der Nadeln 70a in das Gebäck sicherzustellen und ein Verkratzen des Backbleches zu verhindern, ist an der Lagerplatte 40 ein Niederhalter 81 einer solchen Länge zwischen den Abnehmern angeordnet, daß die Nadeln 70a bis etwa zur halben Tiefe der Vertiefungen 23 reichen, wenn die Stirnfläche 80a des Niederhalters auf dem Backblech 22 aufsetzt.

## Patentansprüche

1. Vorrichtung zur Herstellung und vereinzelten Ablage von Gebäckteigformlingen (25) auf ein vorzugsweise schrittweise antreibbares Förderband (20) oder Backblech (22), dadurch gekennzeichnet,

daß sie aus einem Trog (11) für Gebäckteig (15) mit einem Boden (14) besteht und mindestens einen Aufnehmer (50) enthält mit einem einseitig offenen, vorzugsweise zylindrischen, Formraum (56), der durch die Formwand (59) gebildet wird und mit einem Rand (55) abschließt und in den vorzugsweise axial eine Bohrung (52/65) eintritt, und mit einem ersten und zweiten Antrieb (231, 236), durch den der Formraum (56) so positioniert werden kann, daß der Rand (55) in einer ersten Stellung den Boden (14) berührt und daß er sich in einer zweiten Stellung über dem Förderband (20) bzw. dem Backblech (22) befindet, und mit einem dritten Antrieb (238), der den Aufnehmer (50) in der ersten Stellung axial zu dem Formraum (56), relativ zum Boden (14) verdrehen kann, und mit einem Auswerfer (60), der in der Bohrung (52) verschieblich ist und mit einem vierten Antrieb (237) mit einer Stirnseite (64) zu der Formwand (59) wahlweise bündig oder in den Formraum (56) eintretend eingestellt werden kann, und/oder mit einer steuerbaren Zuführung von Druckluft durch die Bohrung (65).

2. Vorrichtung nach Anspruch 1, dadurch gekennzeichnet,

daß der Aufnehmer (50) ein zylinderförmiger Körper ist, an dessen einer Stirnseite sich der Formraum (56) befindet, dessen Durchmesser etwa das Eineinhalbfache seiner Tiefe beträgt, und daß die Bohrung (52) konzentrisch dazu verläuft und deren Durchmesser etwa ein Drittel des Durchmessers des Formraumes (56) beträgt, und daß der Aufnehmer (50) in einem Lager (57) drehbar gelagert ist, und er vorzugsweise koaxial einen Zahnkranz (51) trägt, der vorzugsweise über eine Kette (39) mit dem dritten Antrieb (238) verbunden ist, und daß vorzugsweise die Achse des Formraumes (56) um einen kleinen Winkel ($\alpha$) gegen die Lagerachse des Aufnehmers (50) geneigt und/oder geringfügig gegen diese versetzt ist.

3. Vorrichtung nach Anspruch 2, dadurch gekennzeichnet,

daß die Bohrung (65) konzentrisch in dem Aufnehmer (50) oder ggf. in dem Auswerfer (60) geführt ist und ca. 1 mm Durchmesser hat.

4. Vorrichtung nach Anspruch 2, dadurch gekennzeichnet,

daß der Auswerfer (60) in der Bohrung (52) nahe dem Formraum (56) mit einem Dichtring (53) verschieblich und verdrehbar gelagert ist.

5. Vorrichtung nach Anspruch 2, dadurch gekennzeichnet,

daß der Auswerfer (60) insbesondere dessen Stirnfläche (64) und/oder der Aufnehmer (50) insbesondere die Formwand (59) aus Kunststoff, vorzugsweise Polytetrafluoräthylen, besteht und die Wandung des Formraumes (56) mit einem Metallring (54), vorzugsweise aus Messing, armiert ist.

6. Vorrichtung nach einem der Ansprüche 1 bis 5, dadurch gekennzeichnet,

daß in ihr eine oder mehrere Reihen von Aufnehmern (50), vorzugsweise auf Lücke gestellt, vertikal achsenparallel in einer Lagerplatte (40) mit deren Lagern (57) gelagert sind und deren Zahnkränze (51) durch eine durchlaufende Kette (39) mit dem dritten Antrieb (238) verbunden sind und ggf. die Auswerfer (60) mit einem parallel zur Lagerplatte (40) gelagerten Auswerferträger (41) verbunden sind und zwischen der Lagerplatte (40) und dem Auswerferträger (41) der vierte Antrieb (237) angeordnet ist, dessen Hub etwas größer als die Tiefe des Formraumes (56) ist.

7. Vorrichtung nach Anspruch 6, dadurch gekennzeichnet,

daß die Lagerplatte (40) vorzugsweise in Stangen (34a, b) vertikal parallel geführt ist und mit dem zweiten Antrieb (236) vertikal positionierbar verbunden ist, dessen Hub etwas größer als die Tiefe des Troges (11) ist.

8. Vorrichtung nach Anspruch 6 oder 7, dadurch gekennzeichnet,

daß die Lagerplatte (40) und/oder der zweite Antrieb (236) mit einer horizontalen Parallelführung, z.B. einem Wagen (33), der mit Rädern (32b) auf Schienen (32a) steht, verbunden ist und die Parallelführung in einem Gestell (1) sich oberhalb des Troges (11) und des Förderbandes (20) erstreckend angeordnet ist und die Lagerplatte (40) mit dem ersten Antrieb (231) horizontal positionierbar verbunden ist.

9. Vorrichtung nach Anspruch 8, dadurch gekennzeichnet,

daß oberhalb des Förderbandes (20) bzw. des Backbleches (22) ein Abstreifer (61) horizontal, vorzugsweise seitlich, verschieblich gelagert ist, der ca. einige Millimeter stark ist, und Bohrungen (62) besitzt, deren Durchmesser etwas größer als der Formraum (56) ist, und die in ihrer Anordnung derjenigen der Aufnehmer (50) entsprechen und an die sich ggf. in Richtung der Verschieblichkeit ein Schlitz (63) anschließt, dessen Breite etwas größer als der Durchmesser des Auswerfers (60) ist und dessen Länge etwa dem Durchmesser der Bohrung (62) entspricht.

10. Vorrichtung nach Anspruch 9, dadurch gekennzeichnet,

daß der Abstreifer (61) mit einem fünften Antrieb (261) verbunden ist, der den Abstreifer in Richtung des Verlaufes der Schlitze (63) um den Durchmesser der Bohrung (62) verschieben kann.

11. Vorrichtung nach einem der vorherigen Ansprüche, dadurch gekennzeichnet,

daß der erste bis fünfte Antrieb (231, 236, 237, 261, 238) pneumatisch gesteuerte Antriebe sind und der dritte Antrieb (238) vorzugsweise aus zwei pneumatischen Antrieben (238a, b) besteht, die die Kette (39) vor- bzw. rückwärts bewegen und deren Hub etwa dem Umfang der Zahnkränze (51) entspricht.

12. Vorrichtung nach einem der vorherigen Ansprüche, dadurch gekennzeichnet,

daß der Trog (11) rund ist und einen Radius hat, der etwas größer ist als die Ausdehnung der Reihenanordnung der Aufnehmer (50) und in seiner Mitte mit einem Lager (13) am Gestell (1) drehbar gelagert ist und mit einem vorzugsweise schrittweise steuerbaren sechsten Antrieb (212) verbunden ist.

13. Vorrichtung nach Anspruch 12, dadurch gekennzeichnet,

daß in Trog (11) radial ein elastischer, vorzugsweise rechenförmig, ausgebildeter Verteiler (16) in einer Höhe, die dem Zwei- bis Dreifachen der Tiefe des Formraumes (56) entspricht, hineinragt.

14. Vorrichtung nach einem der vorherigen Ansprüche, dadurch gekennzeichnet,

daß das Backblech (22) runde Vertiefungen (23) besitzt, deren Volumen dem Volumen des Formraumes (56) und deren Tiefe etwa der halben Tiefe des Formraumes (56) entsprechen und deren Seiten kegelförmig mit ca. 45° abgeschrägt verlaufen und die vorzugsweise radial eine ca. 1 mm hohe keilförmige Erhöhung (24) aufweisen, und daß die Vertiefungen (23) in der gleichen Anordnung, in der die Aufnehmer (50) zueinander angeordnet sind, einfach oder mehrfach nebeneinander in dem Backblech (22) vorhanden sind.

15. Vorrichtung nach einem der vorherigen Ansprüche, dadurch gekennzeichnet,

daß auf dem Förderband (20) Mitnehmer (27) und an dem Gestell (1) Führungen (28a, b) für die Backbleche (22) angeordnet sind und am Gestell (1) ein Melder (350) für die Backblechposition in einer Stellung angeordnet ist, in der sich das Backblech (22) ggf. mit seinen Vertiefungen (23) unter den Aufnehmern (50) bzw. dem Abstreifer (16) befindet.

16. Vorrichtung nach einen der vorherigen Ansprüche, dadurch gekennzeichnet,

daß der Förderbandantrieb (221) und der erste bis sechste Antrieb (231, 236, 238, 237, 261, 212) und der Melder (350) mit einer Steueranlage (ST1) durch Steuerleitungen bzw. Signalleitungen verbunden sind.

17. Verfahren zur Steuerung der Vorrichtung nach einem der vorherigen Ansprüche, dadurch gekennzeichnet,

daß der Aufnehmer (50) mit dem Formraum (56) aus einer Stellung über dem Trog (11) langsam bis auf den Boden (14) abgesenkt wird, ohne nach unten gerichtete Kraft am oder dicht über dem Boden (14) gehalten und in dieser Stellung um ca. 360° gedreht und vorzugsweise kurz vor Ende der Drehung um etwa den Durchmesser des Formraumes (56) seitlich verschoben wird, anschließend bis über den Trogrand (17) angehoben wird und dann über das Förderband (20) und ggf. das Backblech (22), ggf. die Vertiefungen (23) positioniert wird, und daß anschließend Druckluft und/oder der Auswerfer (60) in den Formraum (56) eingeführt wird bzw. werden, während vorzugsweise eine Rückdrehung des Aufnehmers (50) um 360° erfolgt, und

daß anschließend ggf. der Abstreifer (61) seitlich hin und zurück betätigt wird, und daß anschließend der Aufnehmer (50) in die Stellung über dem Trog (11) positioniert und der Auswerfer (60) mit der Formraumwand (59) bündig gestellt wird.

18. Verfahren nach Anspruch 17, dadurch gekennzeichnet,

daß nach der Betätigung des Auswerfers (60) und ggf. des Abstreifers (61) das Förderband (20) bzw. das Backblech (22) um diejenige Strecke weitertransportiert wird, die sich während des Auswerfens unter dem Aufnehmer (50) befand bzw. so lange weitertransportiert wird, bis der Melder (350) die exakte Positionierung eines nächsten Backbleches (22) signalisiert.

19. Verfahren nach Anspruch 17 oder 18, dadurch gekennzeichnet,

daß nach dem Anheben der Aufnehmer (50) über den Trogrand (17) der Trog (11) mindestens um den Abschnitt weiterpositioniert wird, in den die Aufnehmer (50) abgesenkt waren, und daß vorzugsweise der Trog (11) kurz vor Ende der Drehung des Aufnehmers (50) um etwa den Durchmesser des Formraumes (56) weiterpositioniert wird.

20. Vorrichtung zur Verarbeitung von Gebäckteigformlingen (25) unter Verwendung der Vorrichtung (109) gemäß einem der Ansprüche 1 bis 16 gesteuert nach dem Verfahren gemäß einem der Ansprüche 17 bis 19, dadurch gekennzeichnet,
daß das Förderband (20) in Förderrichtung hinter der Aufnehmervorrichtung (109) durch einen Ofen (101), dahinter durch einen Kühler (102) dahinter vorzugsweise durch eine Nachheizung (111) und dahinter in eine Abnehmervorrichtung (110) und von dort zur Aufnehmervorrichtung (109) geführt ist.

21. Vorrichtung nach Anspruch 20, dadurch gekennzeichnet,
daß das Förderband (20) vor der Aufnehmervorrichtung (109) und vorzugsweise hinter dem Kühler (102) jeweils einen Stapelraum (106, 112) für Backbleche (22) durchläuft und vorzugsweise im Ofen (101) und/oder im Kühler (102) Paternostertransporte angeordnet sind.

22. Vorrichtung nach dem Anspruch 20 oder 21, dadurch gekennzeichnet,
daß die Abnehmervorrichtung (110) die Gebäckstücke (26) auf ein weiteres Förderband (80) setzt und dieses in Förderrichtung, vorzugsweise in Schokoladengießanlage (103), und von dort in eine Verpackungsanlage (104) führt.

23. Vorrichtung nach einem der Ansprüche 20 bis 22, dadurch gekennzeichnet,
daß die Abnehmervorrichtung (110) entsprechend der Vorrichtung (109) aufgebaut ist und bei ihr statt des Troges (11) das Förderband (80) und jeweils statt der Aufnehmer (50) ein Abnehmer (70) darin eingesetzt sind und der Abnehmer (70) dem Aufnehmer (50) entsprechend gestaltet ist, wobei statt des Formraumes (56) ein dem Durchmesser des Gebäckstückes (26) entsprechender zylindrischer Raum vorhanden ist, der mit einem Kunststoffschaumkörper (76), der randseitig eine abgerundete Lippe (79) aufweist und durch den die axiale Bohrung (72) hindurchgeführt ist, ausgefüllt ist.

24. Verfahren zur Steuerung der Vorrichtung nach Anspruch 23, dadurch gekennzeichnet,
daß die Lippe (79) dicht über das Gebäckstück (26) positioniert wird und der Bohrung (72) Vakuum zugeführt wird und der Abnehmer (70) axial langsam um ca. 360° verdreht wird und anschließend der Abnehmer (70) angehoben und über das Förderband (80) positioniert wird und anschließend das Vakuum abgeschaltet wird und nach einer kurzen Verweilzeit der Abnehmer (70) über das andere Förderband (20) zurückpositioniert wird.

25. Vorrichtung nach einem der Ansprüche 1 bis 16 oder 20 bis 23, dadurch gekennzeichnet,
daß in den Trog (11) ein Teigtransport (108) ausgangsseitig geführt ist, der eingangsseitig an einem Teigmischer (100) angeschlossen ist und vorzugsweise sich an dem Trog (11) ein Teigniveaumelder (309) befindet, durch den ein Teigtransportantrieb (208) des Teigtransportes (108) und/oder der Mischerantrieb (200) des Teigmischers (100) gesteuert wird.

26. Vorrichtung nach einem der Ansprüche 20 bis 24, dadurch gekennzeichnet,
daß sie eine Zentralsteuerung (STZ) besitzt, die durch Signalleitungen (400... 480) mit Meldern (300 ... 380) und durch Steuerleitungen (500... 580) mit Antrieben (200... 280) verbunden ist und durch Signal- und Steuerleitungen (601, 602) mit den Steuerungen (ST 1, ST 2) der Aufnehmervorrichtung (109) bzw. Abnehmervorrichtung (110) verbunden ist.

27. Verfahren zur Steuerung der Vorrichtung nach einem der Ansprüche 20 bis 23, 25 und 26, dadurch gekennzeichnet,
daß die Durchführung eines Verfahrenszyklus der Abnehmervorrichtung (110) und/oder der Aufnehmervorrichtung (109) und der jeweils zugehörige Transportschritt der Förderhänder (20, 80) dann eingeleitet wird, wenn die Melder der in Transportrichtung nachgeschalteten Teilvorrichtungen (103, 104, 107; 101, 102, 111) Betriebsbereitschaft signalisieren und/oder die Melder (306, 312) der Stapelräume (106, 112) freie Kapazität signalisieren.

28. Vorrichtung nach einem der Ansprüche 20 bis 22, dadurch gekennzeichnet,
daß die Abnehmervorrichtung (110) entsprechend der Vorrichtung (109) aufgebaut ist und bei ihr statt des Troges (11) das Förderband (80) und jeweils statt der Aufnehmer (50) Abnehmer (70) darin eingesetzt sind und die Abnehmer (70) den Aufnehmern (50) entsprechend gestaltet sind, aber diese an ihrer unteren Stirnfläche statt des Formraumes (56) eine Anzahl von z. B. vier nach unten gerichtete, etwa 15 mm lange Spitzen (70a), vorzugsweise aus Stahl besitzen, die vorzugsweise in etwa dem halben Radius eines Gebäckstückes von der Mitte aus angeordnet sind, und die durch Bohrungen (69) in einer Abstreiferscheibe (68), die etwa 3 mm stark ist und in Durchmesser einem Gebäckstück entspricht und an der Stirnseite des Auswerfers (60) befestigt ist, hindurchgeführt sind.

29. Vorrichtung nach Anspruch 23 oder 28, dadurch gekennzeichnet,
daß an der Lagerplatte (40) mindestens ein Niederhalter (81) für Backbleche zwischen den Abnehmern (70) angeordnet ist, über dessen untere Stirnfläche (80a) die Spitzen der Nadeln (70a) bzw. die Lippe (79) um einen Betrag hinausragen, der geringer ist als die Tiefe der Vertiefung (23) in Backblech (22).

**Claims**

1. Apparatus for making and for individually depositing of pieces of dough (25) on to a band conveyor (20) that is preferably stepwise drivable, or on to a baking sheet (22), the improvement of the apparatus comprises: a trough (11) for the dough (15) with a floor (14) and includes at least one pick up device (50) with a preferably cylindrical forming chamber (56) formed by a forming wall (59) that is open on one end and is terminating in a rim (55) and preferably provided with an axial bore (52/65) opening into said forming chamber (56), said device further comprising a first and a second drive (231, 236) by means of which the forming chamber (56) can be positioned in such a manner wherein the rim (55) touches in a first position the floor (14) and the rim (55) in a second position is above the band conveyor (20) or, respectively, the baking sheet (22), said apparatus further comprising a third drive (238) for rotating the pick up device (50) axially to the forming chamber (56), relative to the floor (14), when the pick up device (50) is in the first position and an ejector (60) that is slidable in the bore (52) and is adjustable by means of a fourth drive (237) in such a manner that it is either in flush alignment with the forming wall (50) with one leading end (64), or enters into the forming chamber (56), and/or finally comprises a controllable supply of compressed air through the bore (65).

2. Apparatus according to claim 1, the pick up device (50) comprising a cylindrical member provided at one leading end with the forming chamber (56), the diameter of which is equal to approximately one and a half times its depth, and wherein the bore (52) extends concentrically to the forming chamber (56), the bore diameter equalling approximately one third of the forming chamber diameter, and wherein the pick up device (50) is rotatably arranged in a bearing (57) and is preferably fitted with a coaxial sprocket (51), which latter is preferably connected with the third drive (238) by means of a chain (39), and that the axis of the forming chamber (56) preferably either forms a small angle ($\alpha$) with the bearing axis of the pick up device (50) and/or is not aligned with it.

3. Apparatus according to claim 2, comprising the bore (65) being arranged concentrically in the pick up device (50) or, in a given case, in the ejector (60) and has a diameter of approximately 1 mm.

4. Apparatus according to claim 2, comprising the ejector (60) being slidably and rotatably arranged in the bore (52) with a sealing ring (53) near the forming chamber (56).

5. Apparatus according to claim 2, comprising the ejector (60), especially its leading end (64), and/or the pick up device (50), especially the forming wall (59), being constructed from plastic material, preferably polytetrafluoroethylene, and that the wall of the forming chamber (56) is reinforced with a metallic ring (54), preferably a brass ring.

6. Apparatus according to any one of claims 1 to 5, comprising one or several preferably alternating rows of pick up devices (50), said pick up devices being vertically mounted in a bearing plate (40), their axes being in parallel relationship with those of the bearing plate bearings (57), and their sprockets (51) being connected by means of a continuous chain (39) to the third drive (238), and further characterised in that the ejectors (60) are optionally connected with an ejector carrier (41) arranged parallel to the bearing plate (40), and in that the forth drive (237) with a stroke that is somewhat longer than the depth of the forming chamber (56) is arranged between the bearing plate (40) and the ejector carrier (41).

7. Apparatus according to claim 6, comprising the bearing plate (40) which is preferably guided vertically parallel in guide bars (34a, b) and is vertically positionably connected with the second drive of which the stroke is somewhat longer than the depth of the trough (11).

8. Apparatus according to claim 6 or 7, comprising the bearing plate (40) and/or the second drive being connected with a horizontal parallel guiding device, for example, a carriage (33) resting with rollers (32b) und rails (32a), and in that the parallel guiding device is arranged in a framework (1) extending above the trough (11) and the band conveyor (20), and that the bearing plate (40) is horizontally positionably connected with the first drive (231).

9. Apparatus according to claim 8, comprising a stripping device (61) which is horizontally and preferably laterally slidably arranged above the band conveyor (20) or, respectively, the baking sheet (22), said device measuring some millimetres in thickness and being furnished with bores (62) of a diameter slightly larger than the forming chamber (56), the pattern in which said stripping devices (61) are arranged corresponding to that of the pick up devices (50), said stripping device (61) being optionally extended in the direction of slidability by a slot (63) of a width that is somewhat larger than the diameter of the ejector (60) and the length of which corresponds approximately to the diameter of the bore (62).

10. Apparatus according to claim 9, comprising the stripping device (61) being connected with a fifth drive (261) capable of moving the stripping device (61) in line with the slot (63) by the diameter measurement of the bore (62).

11. Apparatus according to any one of the preceding claims, comprising the first up to the fifth drive (231, 236, 237, 261, 238) being pneumatically controlled drives and in that the third drive (238) is preferably composed of two pneumatic drives (238a, b) moving the chain (39) back or forth, their stroke corresponding approximately to the circumference of the sprockets (51).

12. Apparatus according to any one of the preceding claims, comprising the trough (11) being round and having a radius that is somewhat larger than the expanse of the row arrangement of the pick up device (50), being rotatably mounted at its centre by means of a bearing (13) on the framework (11), and being connected to a sixth drive (212) that is preferably stepwise controllable.

13. Apparatus according to claim 12, comprising an elastic distributor (16) preferably of rakelike design projects radially into the trough (11) at a height corresponding to two to three times the depth of the forming chamber (56).

14. Apparatus according to any one of the preceding claims, comprising the baking sheet (22) being equipped with round recesses (23), their volume corresponding to the volume of the forming chamber (56), their depth corresponding to about half the depth of the forming chambers (56), their sides sloping conically at an angle of about 45° and being preferably equipped radially with a wedgelike ridge (24) of approximately 1 mm height, and further comprising the arrangement of the recesses (23) being identical with that of the pick up devices (50), so that such recesses (23) are arranged side by side singly or in multiples on the baking sheet (22).

15. Apparatus according to any one of the preceding claims, comprising entrainers (27) being arranged on the band conveyor (20), that guides for the baking sheets (22) are arranged on the framework (1), and further comprising an indicator (350) of the baking sheet position being arranged on the framework (1), to indicate when the baking sheet (22) is located possibly with its recesses (23) underneath the pick up devices (50) or, respectively, the stripping device (16).

16. Apparatus according to any one of the preceding claims, comprising the band conveyor (221) and the first up to the sixth drive (231, 236, 238, 237, 261, 212) and the indicator (350) being connected to a control plant (ST1) by control lines or, respectively, signalling lines.

17. Method of controlling the apparatus according to any one of the preceding claims, comprising the pick up device (50) with the forming chamber (56) while being slowly lowered from a position above the trough (11) to the floor (14), it is held, without a downwardly directed force, against or just above the floor (14) and it is rotated in this position about approximately 360°, while it is moved laterally by approximately the diameter of the forming chamber (56), preferably just before the rotation is completed, it is subsequently raised above the trough rim (17) and then it is positioned above the band conveyor (20) and optionally the baking sheet (22) or the recesses (23), and further comprising subsequently compressed air and/or the ejector (60) being introduced into the forming chamber (56) while preferably the pick up device (50) is rotated back about 360°, and further comprising the stripping device (61) being subsequently moved back and forth in a lateral direction, if desired, whereupon the pick up device (50) being positioned above the trough (11) and the ejector (60) being positioned flush with the forming chamber wall (59).

18. Method according to claim 17, comprising a step whereby following the activation of the ejector (60) and possibly of the stripping device (61), the band conveyor (20) or, respectively the baking sheet (22), is moved along by the length which was situated underneath the pick up device (50) during ejection, or, respectively, is moved along until the indicator (350) signals the precise positon of the next baking sheet (22).

19. Method according to claim 17 or 18, comprising a step whereby after raising the pick up devices (50) above the trough rim (17), the trough (11) is moved on by at least the length of the section in which the pick up devices (50) had been lowered, and further characterised in that, just before the pick up device (50) completes its rotation, the trough (11) is preferably moved on by approximately the diameter length of the forming chamber (56).

20. Apparatus for handling pieces of dough (25) by using the apparatus according to one of the claims 1 to 16 controlled according to the method of one of the claims 17 to 19, comprising the band conveyor (20) when regarded in the direction of transport being guided from the pick up device (109) through an oven (101), from there through a cooling device (102), then preferably through an additional heater (111) into a removal device (110) and from there to the pick up device (109).

21. Apparatus device according to claim 20, comprising the band conveyor (20) carrying baking sheets (22) is passing through a stacking room (106, 112) before it reaches the pick up device (109) and further comprising continuous lifts being arranged, preferably downstream of the cooler, in the oven (101) and/or in the cooler (102).

22. Apparatus according to claim 20 or 21, comprising the pick up device (110) is depositing the biscuits (26) on a second band conveyor (80) and carriers them in transporting direction preferably into the chocolate icing plant (103) and from there into a packing plant (104).

23. Apparatus according to any one of claims 20 to 22, comprising the removal device (110) being constructed so as to correspond to the apparatus (109), and in said removal device (110) the trough (11) being replaced by the band conveyor (80), and each pick up device (50) being replaced by a removal device (70), and the removal device (70) being constructed so as to correspond to the pick up device (50), the forming chamber (56) being replaced by a cylindrical chamber corresponding to the diameter of the biscuit (26), said cylindrical chamber accommodating a member of foamed plastic material (76) with a rounded lip (79) at the rim, the axial bore (72) passing through the said plastic foam member (76).

24. Method of controlling the apparatus according to claim 23, comprising steps in which the lip (79) being positioned closely above the biscuit (26), vacuum being applied to the bore (72), and the removal device (70) being slowly rotated about its axis by approximately 360°, then being raised and positioned above the band conveyor (80), whereupon the vacuum ist switched off and the removal device (70) is returned to its position above the other band conveyor (20) after a brief pause.

25. Apparatus according to one of the claims 1 to 16 or 20 to 23, comprising a dough supply device (108) being connected with its output to the trough (11) while the input side of said dough supply device (108) is connected to a dough mixer (100), and preferably, a dough level indicator (309) being arranged on the trough (11), controlling a supply drive (208) of the dough supply device (108) and/or the mixer drive (200) of the dough mixer (100).

26. Apparatus according to any one of claims 20 to 24, comprising a central control device (STZ) connected with indicators (300...380) by signal lines (400...480), and with drives (200...280) by control lines (500...580), and with the controls (ST1,ST2) of the pick up device (109) or the removal device (110) by signalling and control lines (601, 602).

27. Method of controlling the apparatus according to any one of claims 20 to 23, 25 and 26, comprising the operating cycle of the removal device (110) and/or the pick up device (109) and the associated transport step of the band conveyors (20, 80) being commenced when the indicatos of the devices (103, 104, 107; 101, 102), arranged in sequence in the downstream direction, signal that they are ready to start operation, and/or when the indicators of the stacking chambers (306, 312) signal free capacity.

28. Apparatus according to any one of claims 20 to 22, comprising the removal device (110) corresponding in its structure to the pick up device (109), and that in lieu of the trough (11) it is associated with the band conveyor (80), while the pick up device (50) are replaced by removal devices (70), further characterised in that the removal devices (70) are constructed so as to correspond to the pick up devices (50), but are equipped at their lower end surface with a number, for example four, of downwardly directed pins (70a) of about 15 mm length, preferably of steel, said pins (70a) being arranged at a distance of about half a biscuit radius from the centre, and being passed through bores (69) in a stripping disk (68) measuring about 3 mm in thickness and having a diameter that is equal to that of a biscuit, said stripping disk being fastened to the end surface of ejector (60).

29. Apparatus according to claim 23 or 28, comprising the bearing plate (40) between the removal devices (70), at least one holding down device (81) for baking sheets (22), the tips of pins (70a) or, respectively, the lip (79) projecting beyond the end surface (80a) of said holding down device (81) by a length that is shorter than the depth of the recess (23) in the baking sheet (22).

**Revendications**

1. Installation pour la fabrication et la manutention de pièces de pâte (25) les déposant sur une bande transporteuse (20) actionnée de préférence pas à pas, ou sur une tôle à pâtisserie (22), installation caractérisée par le fait qu'elle est constituée par une cuve (11) pour la pâte à pâtisserie (15) comprenant un fond (14) et, au moins, un dispositif de prélèvement (50) équipé d'un creux de moule (56) de préférence cylindrique, ouvert d'un seul côté, formé par une paroi de moule (59) et terminé par un bord (55) et dans lequel une forure (52/65) est pratiquée de préférence axialement, et d'un premier et second entraînement (231/ 236) à l'aide duquel le creux de moule (56) peut être positionné de sorte que, dans une première position, le bord (55) touche le fond (14) et, dans une seconde position, se trouve au-dessus de la bande transporteuse (20), respectivement de la tôle à pâtisserie (22), ainsi que d'un troisième entraînement (238) pouvant tourner le dispositif de prélèvement (50) en position première, axialement par rapport au creux de moule (56), en relation avec le fond (14), et d'un éjecteur (60) pouvant être déplacé par poussée dans la forure (52) et réglé, à l'aide d'un quatrième entraînement (237) de sorte qu'une partie frontale (64) se trouve au niveau de la paroi de moule (59) ou pénètre dans le creux de moule (56) et/ou d'un dispositif manoeuvrable amenant de l'air comprimé dans la forure (65).

2. Installation selon spécification 1, caractérisée par le fait que le dispositif de prélèvement (50) consiste en un corps cylindrique à l'une des parties frontales duquel se trouve le creux de moule (56), dont le diamètre est d'environ une fois et-demie sa profondeur, et que la forure (52), dont le diamètre est égal au tiers environ du diamètre du creux de moule (56), est disposée concentriquement par rapport à ceci, ainsi que par le fait que le dispositif de prélèvement (50) est logé rotativement dans un palier (57) et est pourvu, de préférence, coaxialement d'une couronne dentée (51), reliée de préférence par l'intermédiaire d'une chaîne (39) au troisième entraînement (238), et que l'axe du creux de moule (56) est incliné et/ou légèrement décalé d'un petit angle ($\alpha$) contre l'axe du palier du dispositif de prélèvement (50).

3. Installation selon spécification 2, caractérisée par le fait que la forure (65) est pratiquée concentriquement dans le dispositif de prélèvement (50) ou, le cas échéant, dans l'éjecteur (60) et que son diamètre est d'environ 1 mm.

4. Installation selon spécification 2, caractérisée par le fait que l'éjecteur (60), logé dans la forure (52), à proximité du creux de moule (56) et pourvu d'un anneau d'étanchéité (53), peut être poussé et tourné.

5. Installation selon spécification 2, caractérisée par le fait que l'éjecteur (60), tout particulièrement sa partie frontale (64), et/ou le dispositif de prélèvement (50), tout particulièrement la paroi de moule (59) sont exécutés en matière plastique, de préférence en polytétrafluoréthylène, et que la paroi du creux de moule (56) est armée à l'aide d'un anneau métallique (54), de préférence en laiton.

6. Installation selon l'une des spécification de 1 à 5, caractérisée par le fait qu'un ou plusieurs rangs de dispositifs de prélèvement (50), disposés de préférence à intervalles, sont prévus à l'intérieur d'elle, logés dans une plaque d'appui (40), verticalement paraxialement, avec leurs paliers (57) et que leurs couronnes dentées (51) sont reliées par l'intermédiaire d'une chaîne continue (39) avec le troisième entraînement (238) et par le fait que, le cas échéant, les éjecteurs (60) sont reliés à un support d'éjecteurs (41), logé parallèlement à la plaque d'appui (40), et que le quatrième entraînement (237), dont la levée est un peu plus grande que la profondeur du creux de moule (56), est disposé entre la plaque d'appui (40) et le support d'éjecteurs (41).

7. Installation selon spécification 6, caractérisée par le fait que la plaque d'appui (40) est dirigé de préférence verticalement parallèle dans des tiges (34a,b) et est reliée, verticalement positionnable, avec les second entraînement dont la levée est un peu plus grande que la profondeur de la cuve (11).

8. Installation selon les spécifications 6 ou 7, caractérisée par le fait que la plaque d'appui (40) et/ou le second entraînement (236) sont reliés à un guidage parallèle horizontal, p.ex. un chariot (33), dont les roues (32b) sont posées sur des rails (32a), et que le guidage parallèle est disposé dans un châssis (1) s'étendant au-dessus de la cuve (11) et de la bande transporteuse (20), et que la plaque d'appui (40), positionnable horizontalement, est reliée au premier entraînement (237).

9. Installation selon spécification 8, caractérisée par le fait qu'au-dessus de la bande transporteuse (20), respectivement de la tôle à pâtisserie (22) une raclette de démoulage (61) est montée, laquelle raclette de démoulage présente une épaisseur de quelques millimètres environ et peut être déplacée horizontalement, de préférence latéralement, et est pourvue de perforations (62) dont le diamètre est un peu plus grand que le creux de moule (56) et dont la disposition correspond à celle des dispositifs de prélèvement (50), et auxquelles une fente (63) d'une largeur légèrement supérieure au diamètre de l'éjecteur (60) et d'une longueur correspondant à peu près au diamètre de la perforation (62) peut faire suite, le cas échéant, dans le sens de la translation.

10. Installation selon spécification 9, caractérisée par le fait que la raclette de démoulage (61) est reliée à un cinquième entraînement (261) qui peut déplacer la raclette de démoulage dans le sens de la fente, sur un parcours de l'étendue du diamètre de la perforation (62).

11. Installation selon l'une des spécifications précédentes, caractérisée par le fait que les entraînements, du premier au cinquième (231, 236, 237, 261, 238) sont des entraînements commandés pneumatiquement et que le troisième entraînement (238) est composé de préférence par deux entraînements pneumatiques (238a, b), mouvant la chaîne (39) en avant ou en arrière, et dont la levée correspond approximativement à la circonférence des couronnes dentées (51).

12. Installation selon d'une des spécifications précédentes, caractérisée par le fait que la cuve (11) est ronde, que son rayon est un peu plus grand que l'étendue de la disposition de rangs de dispositifs de prélèvement (50) et est monté rotativement, en son centre, sur le châssis (1) à l'aide d'un palier (13) et est relié à un sixième entraînement (212) commandé de préférence pas à pas.

13. Installation selon spécification 12, caractérisée par le fait qu'un répartiteur (16) élastique, de préférence en forme de râteau, pénètre, radialement, dans la cuve (11) dans une hauteur allant du double au triple de la profondeur du creux de moule (56).

14. Installation selon l'une des spécifications précédentes, caractérisée par le fait que la tôle à pâtisserie (22) présente des cavités rondes (23) dont le volume correspond au volume du creux de moule (56) et la profondeur à la moitié environ de la profondeur du creux de moule, et dont les côtés obliquent coniquement d'environ 45° ; et que ces cavités (23) présentent de préférence radialement une prohéminence (24) cunéiforme d'environ 1 mm de hauteur, et sont disposées, dans le même ordre que les dispositifs de prélèvement (50) le sont par rapport les uns aux autres, une à une ou à plusieurs les unes à côté des autres dans la tôle à pâtisserie (22).

15. Installation selon l'une des spécifications précédentes, caractérisée par le fait que la bande transporteuse (20) est pourvue de tenons d'entraînement (27) et le châssis (1) de guides (28a, b) pour tôles à pâtisserie (22) et qu'un avertisseur (350) équipe le châssis (1), signalant la position dans laquelle la tôle à pâtisserie se trouve, le cas échéant avec ses cavités (23) sous les dispositifs de prélèvement (50) ou sous la raclette de démoulage (16).

16. Installation selon l'une des spécifications précédentes, caractérisée par le fait que l'entraînement de la bande transporteuse (221) et les autres entraînements, du premier au sixième, (231, 236, 238, 237, 261, 212) et l'avertisseur (350) sont reliés à une installation de commande (ST1) à l'aide de câbles de commande resp. de lignes de signalisation.

17. Procédé de commande de l'installation selon l'une des spécifications précédentes, caractérisé par le fait que le dispositif de prélèvement (50) avec le creux de moule (56) est abaissé, à partir d'une position située au-dessus de la cuve (11), lentement jusqu'au fond (14), maintenu sur le fond (14) ou presqu'à raz de celui-ci, sans énergie dirigée vers le bas, et tourné, dans cette position, d'environ 360° et, de préférence peu avant la fin de ce pivotement, décalé latéralement d'environ le diamètre du creux de moule (56), pour être ensuite soulevé jusqu'au-dessus du bord de cuve (17), puis positionné au-dessus de la bande transporteuse (20) et, le cas échéant, de la tôle à pâtisserie (22), ou, le cas échéant, des cavités (20), de même que par le fait que de l'air comprimé et/ou l'éjecteur (60) sont/est introduits ensuite dans le creux de moule (56), tandis que le dispositif de prélèvement (50) exécute de préférence une rotation inverse de 360°, après quoi, le cas échéant, la raclette de démoulage (61) est actionnée latéralement en un mouvement d'avance et retour et que, finalement, le disposif de prélèvement (50) est positionné au-dessus de la cuve (11) et l'éjecteur (60) mis à niveau avec la paroi de moule (59).

18. Procédé selon spécification 17, caractérisé par le fait qu'après actionnement de l'éjecteur (60) et, le cas échéant, de la raclette de démoulage (61), la bande transporteuse (20) respectivement la tôle à pâtisserie (22) est transportée sur un parcours égale à la section qui se trouvait sous le dispositif de prélèvement (50) pendant l'éjection, ou bien transportée jusqu'à ce que l'avertisseur (350) signale le positionnement exact de la tôle à pâtisserie (22) suivante.

19. Procédé selon spécification 17 ou 18, caractérisé par le fait qu'après le soulèvement du dispositif de prélèvement (50) au-dessus du bord de cuve (17), la cuve est positionnée, avancée d'au moins la section, dans laquelle les dispositifs de prélèvement (50) avaient été baissés, et que la cuve (11) est,de préférence, positionnée, avancée d'environ le diamètre du creux de moule (56), peu avant que le dispositif de prélèvement (50) ait terminé sa rotation.

20. Installation pour la fabrication de pièces de pâte (25) en recourant à l'utilisation du dispositif (109) selon l'une des spécifications de 1 à 16 et du procédé selon spécifications de 17 à 19, caractérisée par le fait que la bande transporteuse (20) est conduite, dans le sens de marche, derrière le dispositif de réception (109), en passant par un four (101), puis par un refroidisseur (102), puis, de préférence, par un postchauffage (11) et ensuite dans un dispositif d'enlèvement (110) et de là au dispositif de réception (109).

21. Installation selon spécification 20, caractérisée par le fait que la bande transporteuse (20) en amont du dispositif de réception (109) et de préférence en aval du dispositif de refroidissement (102) traverse, chaque fois, une chambre d'empilage (106, 112) de tôle à pâtisserie (22) et que des élévateurs transporteurs se trouvent disposés de préférence dans le four (101) et/ou dans le refroidisseur (102).

22. Installation selon spécification 20 ou 21, caractérisée par le fait que le dispositif d'enlèvement (110) dépose les pièces de pâtisserie (26) sur une autre bande transporteuse (80) et que celle-ci est conduite dans le sens de la marche, de préférence, dans une installation de déversement de chocolat (103) et de la dans une installation d'empaquetage (104).

23. Installation selon l'une des spécifications de 20 à 22, caractérisée par le fait que le dispositif d'enlèvement (110) est conçu conformément au dispositif de réception (109) et qu'il est équipé de la bande transporteuse (80) au lieu de la cuve (11) et d'un dispositif de prélèvement (70) au lieu de chacun des dispositifs de prélèvement (50), et que le dispositif de prélèvement (70) est conçu conformément au dispositif de prélèvement (50), le creux de moule (56) y étant remplacé par un cylindre correspondant au diamètre de la pièce de pâtisserie (26), laquelle cavité cylindrique contient une pièce de mousse synthétique (76), présentant au bord une lèvre arrondie (79), et à travers laquelle passe la foture axiale (72).

24. Procédé de commande de l'installation selon spécification 23, caractérisé par le fait que la lèvre (79) est positionnée à proximité directe au-dessus de la pièce de pâtisserie et que la forure est mise sous vide et le dispositif de prélèvement (70) lentement tourné, axialement, d'environ 360°, puis soulevé et positionné au-dessus de la bande transporteuse (80), après quoi le vacuum est arrêté et le dispositif de prélèvement (70), après un bref séjour, est est ramené en positionnement au-dessus de l'autre bande transporteuse (20).

25. Installation selon l'une des spécifications de 1 à 16 ou de 20 à 23, caractérisée par le fait qu'un dispositif de transport de pâte (108) est conduit dans la cuve (11), côté sortie, lequel dispositif de transport de pâte (108) est relié, à son entrée, à un mélangeur à pâte (100), et que, de préférence, la cuve (11) est pourvue d'un dispositif de signalisation de niveau de pâte (309) commandant un entraînement de transport de pâte (208) qui actionne le dispositif de transport de pâte (108),et/ou l'entraînement de mélangeur (200) qui actionne le mélangeur à pâte (100).

26. Installation selon l'une des spécifications de 20 à 24, caractérisée par le fait qu'elle possède une commande centrale (STZ), reliée aux avertisseurs (300... 380) à l'aide des lignes de signalisation (400 ... 480) et aux entraînements (200... 280) à l'aide des câbles de commande (500... 580), ainsi qu'aux commandes (ST 1, ST 2) du dispositif de réception (109) resp. au dispositif d'enlèvement (110) à l'aide des lignes de signalisation et des câbles de commande (601, 602).

27. Procédé de commande de l'installation selon l'une des spécifications de 20 à 23, 25 et 26, caractérisé par le fait que l'exécution d'un cycle de processus du dispositif d'enlèvement (110) et/ou du dispositif de réception (109) et la réalisation du pas correspodant de la bande transporteuse en question (20, 80) sont amorcées lorsque les avertisseurs des installations partielles (103, 104, 107; 101, 102, 111), disposées en aval dans le sens du transport, signalent la disponibilité et/ou lorsque les avertisseurs (306, 312) des chambres d'empilage (106, 112) signalent capacité libre.

28. Installation selon l'une des spécifications de 20 à 22, caractérisée par le fait que le dispositif d'enlèvement (110) est conçu conformément au dispositif de réception (109) et qu'il est pourvu de la bande transporteuse (80) au lieu de la cuve (11) et de dispositifs de prélèvement (70) au lieu des dispositifs de prélèvement (50), les dispositifs de prélèvement (70) étant conçus conformément aux dispositifs de prélèvement (50), tout en étant cependant équipés à leur partie frontale inférieure, à la place du creux de moule (56), d'un nombre - quatre par exemple - de pointes (70a) d'environ 15 mm de longueur, dirigées vers le bas et exécutées de préférence en acier, disposées de préférence sur le demi rayon d'une pièce de pâtisserie, en partant du centre, et traversant par des forures (69) un disque à repousser (68) d'environ 3 mm d'épaisseur et d'un diamètre correspondant à celui d'une pièce de pâtisserie, lequel est fixé à la partie frontale de l'éjecteur (69).

29. Installation selon spécification 23 ou 28, caractérisée par le fait que la plaque d'appui (40) est pourvu d'au moins un serre-flan (81) pour tôles à pâtisserie, disposé entre les dispositifs de prélèvement (70), et au-dessus de la partie frontale (80a) duquel les pointes des aiguilles (70a) respectivement la lèvre (79) dépassent d'une longueur inférieure à la profondeur de la cavité (23) de la tôle à pâtisserie (22).

Fig.1

Fig. 2

0 099 510

Fig. 3

Fig. 4

Fig. 4a

Fig.5a

Fig.5

Fig.5b

Fig.6

0 099 510